(19)

**Europäisches Patentamt**
**European Patent Office**
**Office européen des brevets**

(11)     **EP 1 346 509 B1**

(12)                           **EUROPÄISCHE PATENTSCHRIFT**

(45) Veröffentlichungstag und Bekanntmachung des
Hinweises auf die Patenterteilung:
**04.02.2009  Patentblatt 2009/06**

(21) Anmeldenummer: **01270975.4**

(22) Anmeldetag: **06.12.2001**

(51) Int Cl.:
*H04L 9/30* *(2006.01)*

(86) Internationale Anmeldenummer:
**PCT/EP2001/014350**

(87) Internationale Veröffentlichungsnummer:
**WO 2002/049266 (20.06.2002 Gazette 2002/25)**

(54) **Verfahren und Vorrichtung zum Ermitteln eines Schlüsselpaars und zum Erzeugen von RSA-Sclüsseln**

Method and device for detecting a key pair and for generating RSA keys

Procédé et dispositif  pour déterminer une paire de clés et pour produire des clés RSA

(84) Benannte Vertragsstaaten:
**AT DE FR GB IT SE**

(30) Priorität: **12.12.2000  DE 10061697**

(43) Veröffentlichungstag der Anmeldung:
**24.09.2003  Patentblatt 2003/39**

(73) Patentinhaber: **Infineon Technologies AG**
**81669 München (DE)**

(72) Erfinder: **SEIFERT, Jean-Pierre**
**81669 München (DE)**

(74) Vertreter: **Zinkler, Franz et al**
**Schoppe, Zimmermann, Stöckeler & Zinkler**
**Patentanwälte**
**Postfach 246**
**82043 Pullach bei München (DE)**

(56) Entgegenhaltungen:
**US-A- 5 046 094          US-A- 5 905 799**

• **DESMEDT Y ET AL: "Multi-receiver/multi-sender network security: efficient authenticated multicast/feedback" ONE WORLD THROUGH COMMUNICATIONS. FLORENCE, MAY 4 - 8, 1992, PROCEEDINGS OF THE CONFERENCE ON COMPUTER COMMUNICATIONS (INFOCOM), NEW YORK, IEEE, US, Bd. 2 CONF. 11, 4. Mai 1992 (1992-05-04), Seiten 2045-2054, XP010062202 ISBN: 0-7803-0602-3**

**EP 1 346 509 B1**

Printed by Jouve, 75001 PARIS (FR)

**Beschreibung**

Die vorliegende Erfindung bezieht sich auf den RSA-Kryptographie-Algorithmus und insbesondere auf das Erzeugen von RSA-Schlüsseln. Das RSA-Kryptosystem, das nach seinen Erfindern R. Rivest, A. Shamir und L. Adleman benannt ist, ist eines der am weitesten verbreiteten Public-Key-Kryptosysteme. Es kann verwendet werden, um sowohl Geheimhaltung zu erreichen als auch digitale Unterschriften zu erzeugen. Seine Sicherheit basiert darauf, daß das sogenannten Ganzzahl-Faktorisierungsproblem derzeit nicht algorithmisch effizient gelöst werden kann.

Bevor näher auf das RSA-Kryptosystem eingegangen wird, seien zunächst einige Grundbegriffe der Kryptographie zusammengefaßt. Allgemein unterscheidet man zwischen symmetrischen Verschlüsselungsverfahren, die auch als Secret-Key-Verschlüsselungsverfahren bezeichnet werden, und Public-Key-Verschlüsselungsverfahren, welche auch als Verschlüsselungsverfahren mit öffentlichem Schlüssel bezeichnet werden.

Ein Kommunikationssystem mit zwei Parteien, welche eine Verschlüsselung mit symmetrischem Schlüssel verwenden, kann folgendermaßen beschrieben werden. Die erste Partei teilt ihren Verschlüsselungsschlüssel über einen sicheren Kanal der zweiten Partei mit. Dann verschlüsselt die erste Partei die geheime Nachricht mittels des Schlüssels und überträgt die verschlüsselte Nachricht über einen öffentlichen oder nicht-gesicherten Kanal zu der zweiten Partei. Die zweite Partei entschlüsselt dann die verschlüsselte Nachricht unter Verwendung des symmetrischen Schlüssels, der der zweiten Partei über den gesicherten Kanal mitgeteilt worden ist..Ein wesentliches Problem bei solchen Verschlüsselungssystemen besteht darin, ein effizientes Verfahren zum Austauschen der geheimen Schlüssel, d. h. zum Finden eines sicheren Kanals, zu schaffen.

Bei der asymmetrischen Verschlüsselung wird hingegen folgendermaßen vorgenommen. Eine Partei, die eine geheime Nachricht erhalten möchte, teilt ihren öffentlichen Schlüssel der anderen Partei, d. h. der Partei, von der sie eine geheime Nachricht erhalten möchte, mit. Der öffentliche Schlüssel wird über einen nicht-gesicherten Kanal, also über einen "öffentlichen" Kanal mitgeteilt.

Die Partei, die eine geheime Nachricht abschicken möchte, empfängt den öffentlichen Schlüssel der anderen Partei, verschlüsselt die Nachricht unter Verwendung des öffentlichen Schlüssels und sendet die verschlüsselte Nachricht wieder über einen nicht-gesicherten Kanal, also über einen öffentlichen Kanal, zu der Partei, von der der öffentliche Schlüssel stammt. Lediglich die Partei, die den öffentlichen Schlüssel erzeugt hat, ist in der Lage, einen privaten Schlüssel bereitzustellen, um die verschlüsselte Nachricht zu entschlüsseln. Nicht einmal die Partei, die unter Verwendung des öffentlichen Schlüssels ihre Nachricht verschlüsselt hat, ist in der Lage, die Nachricht zu entschlüsseln. Ein Vorteil dieses Konzepts besteht darin, daß zwischen den beiden Parteien kein gesicherter Kanal, also kein geheimer Schlüsselaustausch erforderlich ist. Die Partei, die die Nachricht verschlüsselt hat, muß und darf den privaten Schlüssel des Nachrichtenempfängers nicht kennen.

Ein physikalisches Analogon zum asymmetrischen Verschlüsselungskonzept oder Public-Key-Verschlüsselungskonzept stellt sich folgendermaßen dar. Es sei eine Metallkiste betrachtet, deren Deckel durch ein Kombinationsschloß gesichert ist. Die Kombination kennt nur die Partei, die eine verschlüsselte Nachricht erhalten möchte. Wenn das Schloß offen gelassen wird und öffentlich verfügbar gemacht wird, dann kann jeder, der eine geheime Nachricht absetzen will, diese Nachricht in die Metallkiste hinein legen und den Deckel verschließen. Nur der, von dem die Kiste stammt, kennt jedoch die Kombination des Kombinationsschlosses. Nur er ist in der Lage, die Nachricht zu entschlüsseln, d. h. die Metallkiste wieder zu öffnen. Selbst der, der die Nachricht in die Kiste hineingelegt hatte, ist nicht mehr in der Lage, dieselbe wieder herauszuholen.

Wesentlich für asymmetrische oder Public-Key-Verschlüsselungskonzepte ist das zugrunde liegende mathematische Problem, dessen Lösung unter Verwendung des öffentlichen Schlüssels zur Entschlüsselung nahezu unmöglich ist, dessen Lösung jedoch unter Kenntnis des privaten Schlüssels leicht möglich ist. Eines der bekanntesten Public-Key-Kryptosysteme ist das RSA-Kryptosystem. Das RSA-Kryptosystem ist im "Handbook of Applied Cryptography", Menezes, van Oorschot, Vanstone, CRC Press 1997, Seiten 285-291 beschrieben.

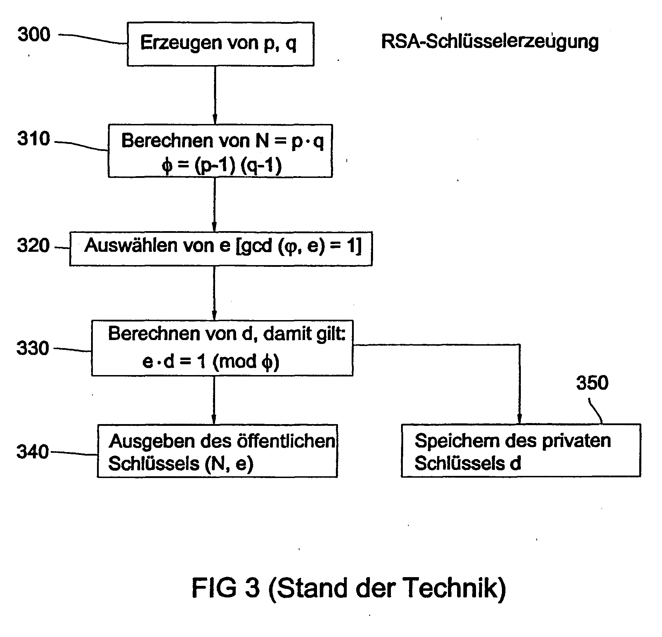

Zunächst besteht die Aufgabe darin, die Schlüssel für das RSA-Kryptosystem zu erzeugen. Hierzu wird auf Fig. 3 Bezug genommen. Eine Entität, die eine verschlüsselte Nachricht empfangen soll, muß in einem ersten Schritt 300 zunächst zwei große Primzahlen p und q erzeugen, die bevorzugterweise etwa dieselbe Größe haben stollen. Anschließend wird in einem Schritt 310 das Produkt aus den beiden Primzahlen berechnet, das auch als der Modul N bezeichnet wird. Darüber hinaus wird die Eulersche $\phi$-Funktion berechnet, die gleich dem Produkt aus (p-1) und (q-1) ist. Dann wird eine zufällige Ganzzahl e in einem Schritt 320 ausgewählt, wobei e derart ausgewählt wird, daß e größer als 1 und kleiner als $\phi$ ist, und wobei ferner zu gelten hat, daß der größte gemeinsame Teiler gcd (gcd = greatest common divisor) von e und $\phi$ gleich 1 ist, d. h. daß e und $\phi$ teilerfremd sind. Anschließend wird in einem Schritt 330 eine Zahl d berechnet, die folgende Gleichung erfüllen muß:

$$e \times d = 1 \bmod \phi$$

d wird auch als multiplikative Inverse bezüglich des Moduls $\phi$ bezeichnet und wird üblicherweise mit dem erweiterten Euklidschen Algorithmus berechnet, welcher ebenfalls im "Handbook of Applied Crytography", Seite 67, beschrieben ist. d ist also eine eindeutige Ganzzahl, die größer als 1 und kleiner als $\phi$ ist, und die die gegebenen Gleichung erfüllt.

In einem Schritt 340 wird dann der öffentliche Schlüssel ausgegeben, wobei der öffentliche Schlüssel den Modul N und die Zahl e umfaßt. Der private Schlüssel d wird hingegen nicht ausgegeben, sondern in einem Schritt 350 gespeichert, um zur Entschlüsselung herangezogen zu werden, wenn die Schlüssel-erzeugende Entität eine mit dem in dem Schritt 340 ausgegebenen öffentlichen Schlüssel verschlüsselte Nachricht erhalten hat.

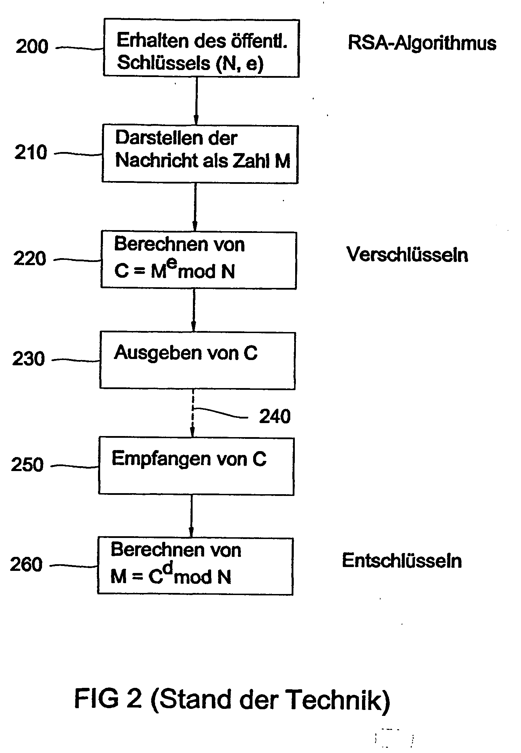

Anschließend wird auf Fig. 2 Bezug genommen, um den RSA-Algorithmus darzustellen. Ausgangslage ist, daß ein Kommunikationspartner eine Nachricht M verschlüsselt, die der andere Kommunikationspartner wieder entschlüsseln muß. Die verschlüsselnde Entität muß zunächst in einem Schritt 200 den öffentlichen Schlüssel (N, e) erhalten, um der anderen Partei überhaupt eine verschlüsselte Nachricht schicken zu können. Daran anschließend muß die verschlüsselnde Entität in einem Schritt 210 die zu verschlüsselnde Nachricht als Ganzzahl M darstellen, wobei M in dem Intervall von 0 bis N-1 liegen muß. In einem Schritt 220, welcher der eigentliche Verschlüsselungsschritt ist, muß die verschlüsselnde Entität folgende Gleichung berechnen:

$$C = M^e \bmod N.$$

C ist die verschlüsselte Nachricht. Diese wird dann in einem Schritt 230 ausgegeben und über einen öffentlichen Kanal, der in Fig. 2 mit 240 bezeichnet ist, zu dem Empfänger der verschlüsselten Nachricht übertragen. Dieser empfängt in einem Schritt 250 die verschlüsselte Nachricht C und führt in einem Schritt 260, welcher der eigentliche Entschlüsselungsschritt ist, folgende Berechnung durch:

$$M = C^d \bmod N.$$

Aus Fig. 2 ist zu sehen, daß zum Verschlüsseln lediglich der öffentliche Schlüssel (N, e) benötigt wird, jedoch nicht der private Schlüssel d, während beim Entschlüsseln der private Schlüssel d benötigt wird.

Fraglich ist nun, wie ein Angreifer ein RSA-Kryptosystem brechen kann. Ihm ist der öffentliche Schlüssel, also N und e bekannt. Er könnte nunmehr genauso, wie es in Fig. 3 gezeigt ist, den Modul N in ein Produkt von zwei Primzahlen faktorisieren und dann den geheimen Schlüssel d genauso berechnen, wie es die Schlüssel-erzeugende authentische Partei gemacht hat. Der Angreifer müßte hierzu sämtliche mögliche Primzahlenpaare p', q' durchprobieren, um dann irgendwann unter Berücksichtigung von e auf den privaten Schlüssel d zu stoßen. Bei kleinen Primzahlen p und q ist dieses Problem relativ leicht einfach durch Durchprobieren zu lösen. Werden jedoch p und q, also der Modul N, der ja gleich der Produkt aus p und q ist, immer größer, so steigen die verschiedenen Möglichkeiten für die Faktorisierung des Moduls N in astronomische Höhen. Hierauf basiert die Sicherheit des RSA-System. Daraus ist zu sehen, daß sichere Kryptosysteme sehr lange Zahlen verwenden müssen, welche beispielsweise 512, 1024 oder aber bis zu 2048 Bit lang sein können.

Mit zunehmender Länge der Primzahlen p und q wird jedoch auch das Berechnen der multiplikativen Inversen, also des privaten Schlüssels d im Schritt 330 von Fig. 3 zeitkritisch. Hierzu wird der erweiterte Euklidsche Algorithmus verwendet, dessen Rechenzeitbedarf mit zunehmender Länge der einschlägigen Zahlen ebenfalls beträchtliche Größenordnungen annehmen kann.

Das US-Patent Nr. 5,046,094 bezieht sich auf ein Serverunterstütztes Berechnungsverfahren und eine Verarbeitungseinheit zum Verarbeiten von verteilten Informationen. Zur Schlüsselerzeugung werden zunächst zwei große unterschiedliche Primzahlen erzeugt. Dann wird das Produkt der beiden Primzahlen erzeugt. Dann wird die Carmichael'sche Funktion L erhalten, die das kleinste gemeinsame Vielfache von den erzeugten Primzahlen jeweils weniger 1 ist. Hierauf wird eine Ganzzahl gewählt, die gegenüber L relativ prim ist, und es wird das inverse Element der Multiplikation für die gewählte Ganzzahl bezüglich des Moduls gewählt, wobei das Modul die Carmichael'sche Funktion ist.

In Menezes, Vanstone, van Oorschot: "Handbook of Applied Cryptography" 1997, CRC Press, USA, Seiten 66 bis 68 und 612 bis 613 sind der Enklid'sche Algorithmus zum Berechnen des größten gemeinsamen Teilers von zwei Ganzzahlen, der Chinesische Restsatz und der Algorithmus von Garner beschrieben.

Die Aufgabe der vorliegenden Erfindung besteht darin, ein effizienteres Konzept zum Ermitteln von privaten Schlüsseln zu schaffen.

Diese Aufgabe wird durch ein Verfahren zum Ermitteln eines Schlüsselpaars nach Patentanspruch 1, oder, durch eine Vorrichtung zum Ermitteln eines Schlüsselpaars nach Patentanspruch 5 gelöst.

Der vorliegenden Erfindung liegt die Erkenntnis zugrunde, daß bei der Berechnung des multiplikativen Inversen unter Verwendung der Eulerschen $\phi$-Funktion das Problem besteht, daß die beiden Faktoren der Eulerschen $\phi$-Funktion, also (p-1) und (q-1) nicht teilerfremd sind. Dies ist daraus ersichtlich, daß Primzahlen ungerade Zahlen sind. Wird von einer Primzahl der Wert von "1" subtrahiert, so entsteht eine gerade Zahl, derart, daß die beiden Faktoren (p-1) und (q-1) dahingehend nicht mehr teilerfremd sind, da sie nun zumindest den gemeinsamen Teiler "2" haben. Damit muß der Euklidsche Algorithmus, wie es in Fig. 3 zum Stand der Technik dargelegt worden ist, unter Verwendung der Zahl (p-1)(q-1) der vollen Bitlänge ausgerechnet werden, weshalb dieser Schritt zeitkritisch wird.

Erfindungsgemäß wird zur Berechnung des multiplikativen Inversen nicht mehr die Eulersche $\phi$-Funktion verwendet, sondern die Carmichaelsche $\lambda$-Funktion verwendet.

Die Verwendung der Carmichaelschen $\lambda$-Funktion führt dazu, daß zwei Faktoren auf der rechten Seite der Gleichung zur Berechnung des multiplikativen Inversen teilerfremd sind, so daß der Chinesische Restsatz, der auch als CRT bezeichnet wird (CRT = Chinese Remainder Theorem), eingesetzt werden kann. Der Chinesische Restsatz und der Algorithmus von Garner sind beispielsweise auf Seite 68 und Seiten 612, 613 im "Handbook of Applied Cryptography" beschrieben. Der Chinesische Restsatz kann jedoch nur eingesetzt werden, wenn teilerfremde Faktoren vorliegen.

Der Chinesische Restsatz erlaubt es, daß bei der Berechnung des privaten Schlüssels d, also des multiplikativen Inversen statt einer Berechnung mit voller Bitlänge zwei Berechnungen mit halber Bitlänge und eine schnelle Kombination der Ergebnisse der zwei Berechnungen mit halber Bitlänge ausgeführt werden müssen.

Diese Vorgehensweise führt dazu, daß der private Schlüssel bis zu viermal schneller ausgerechnet werden kann, als wenn, wie im Stand der Technik üblich, die Eulersche $\phi$-Funktion verwendet wird.

Ein Vorteil der vorliegenden Erfindung besteht darin, daß nunmehr bei gleicher Rechenzeit wesentlich längere Primzahlen eingesetzt werden können, und daher die Sicherheit des RSA-Kryptosystems wesentlich erhöht werden kann.

Wenn gleiche Sicherheitsstandards wie im Stand der Technik beibehalten werden, kann dagegen genau am kritischen Punkt, also bei der Berechnung der multiplikativen Inversen, hinsichtlich der Rechenzeiteffizienz eine Verschnellerung um den Faktor 4 erreicht werden. Kryptoprozessoren, die gemäß der vorliegenden Erfindung ausgestattet sind, können daher zu einer wesentlichen Effizienzsteigerung von z. B. TPM-Modulen (TPM = Trusted Platform Module) oder Sicherheit-Ics beitragen. Alternativ kann das erfindungsgemäße Verfahren auch in Smart-Cards eingesetzt werden, in denen oftmals aufgrund der begrenzten zur Verfügung stehenden Rechenleistung auf der Smart-Card Kompromisse bezüglich der Primzahllänge und damit Kompromisse hinsichtlich der Sicherheit eingegangen werden. Hier können mit Hilfe der vorliegenden Erfindung die Sicherheitsstandards bei gleichbleibender Rechenzeit erheblich angehoben werden.

Nachdem die beiden CRT-Glieder getrennt voneinander berechnet werden können, können die beiden CRT-Glieder auch parallel in zwei getrennten Rechenwerken berechnet werden und schließlich "zusammengefügt" werden, so dass sich durch Parallelisierung eine weitere Rechenzeitersparnis erreichen lässt.

Ein bevorzugtes Ausführungsbeispiel der vorliegenden Erfindung wird nachfolgend bezugnehmend auf die beiliegenden Figuren erläutert. Es zeigen:

Fig. 1    ein Blockdiagramm eines bevorzugten Ausführungsbei- spiels des erfindungsgemäßen Verfahrens;

Fig. 2    eine Übersicht über den RSA-Algorithmus; und

Fig. 3    ein schematisches Flußdiagramm zur RSA-Schlüsseler- zeugung.

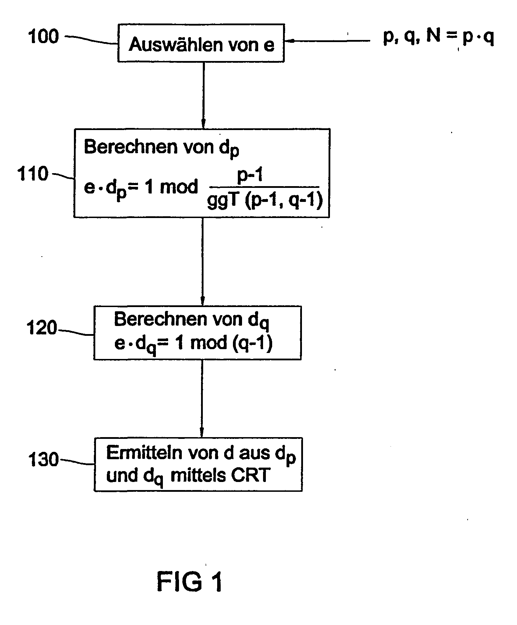

Fig. 1 zeigt ein bevorzugtes Ausführungsbeispiel für das erfindungsgemäße Verfahren zum Ermitteln eines Schlüsselpaars e, d, wobei zunächst, wie üblich, zwei Primzahlen p, q erzeugt werden, welche, miteinander multipliziert, den Modul N ergeben. Hierauf wird in einem Schritt 100 ein erster Schlüssel e ausgewählt. Im Gegensatz zum Stand der Technik wird jedoch zum Berechnen des zweiten Schlüssels d nun nicht mehr die Eulersche $\phi$-Funktion eingesetzt, sondern die Carmichaelsche $\lambda$-Funktion. Die Carmichaelsche $\lambda$-Funktion ist folgendermaßen gegeben:

$$\lambda(N) = (p-1)(q-1)/ggT(p-1,q-1).$$

Für die Carmichaelsche $\lambda$-Funktion gilt folgender Zusammenhang:

$$M^{\lambda(N)} = 1 \bmod N.$$

Der zweite Schlüssel, d. h. der geheime Schlüssel d, wird nunmehr aus den bekannten Daten e, p und q folgendermaßen berechnet:

$$e \times d = 1 \bmod \lambda(N).$$

Zur Lösung obiger Gleichung, also zum Berechnen des multiplikativen Inversen d, kann nunmehr der Chinesische Restsatz (CRT) eingesetzt werden, da die Faktoren

$$(p-1)/ggT(p-1,q-1)$$

und

$$(q-1)$$

nunmehr teilerfremd sind.

Mittels des Chinesischen Restsatzes kann nun das Problem der Berechnung der multiplikativen Inversen d in die Berechnung zweier multiplikativer Inverser $d_p$ und $d_q$ und eines Kombinationsschritts aufgespalten werden.

Hierzu wird zunächst $d_p$ so berechnet, daß folgende Bestimmungsgleichung erfüllt ist:

$$e \times d_p = 1 \bmod [(p-1)/ggT(p-1,q-1)].$$

Analog dazu kann $d_q$ unter Verwendung folgender Bestimmungsgleichung berechnet werden:

$$e \times d_q = 1 \bmod (q-1).$$

Alternativ könnten die teilerfremden Faktoren auch umgekehrt erhalten werden, nämlich als

$$(p-1)$$

und

$$(q-1)/ggT(p-1,q-1).$$

Es sei darauf hingewiesen, daß, wie es aus dem CRT bekannt ist, die beiden Unterschlüssel $d_p$ und $d_q$ halb so lang sind, wie der eigentliche zweite Schlüssel d.

Es sei darauf hingewiesen, daß in den Schritten 110 und 120 von Fig. 1 zwei verschiedene Untermodule verwendet werden. Der erste Untermodul im Schritt 110 lautet:

$$(p-1)/ggT(p-1,q-1).$$

Der zweite Untermodul im Schritt 120 lautet lediglich

$$(q-1).$$

Es ist zu sehen, daß die beiden Untermodule aufgrund der ggT-Operation teilerfremd sind, so daß der CRT zum Erfolg führt. Die beiden Unterschlüssel $d_p$ und $d_q$ werden dann in einem Schritt 130 unter Verwendung des Chinesischen Restsatzes(CRT) kombiniert, um den zweiten bzw. privaten Schlüssel d zu erzeugen.

Hierzu wird zunächst eine Hilfsgröße $x_p$ berechnet, welche durch folgende Gleichung bestimmt ist:

$$x_p = (d_p - d_q) \ x \ [(q-1)^{-1} \bmod (p-1)/ggT(p-1,q-1)]$$
$$\bmod (p-1)/ggT(p-1,q-1).$$

Die Inversenberechnung und die ggT-Berechnung in obiger Gleichung finden mit Zahlen halber Länge statt, was dazu führt, dass diese Schritte weniger zeitkritisch sind.

Der zweite Schlüssel bzw. der private Schlüssel d ergibt sich dann folgendermaßen:

$$d = d_q + x_p \ x \ (q-1) \bmod \lambda(N)$$

Es sei darauf hingewiesen, dass die modulare Reduktion mit mod $\lambda(N)$ in obiger Gleichung nicht mehr durchgeführt werden muss, da d bereits ohne Reduktion in der Restklasse ist.

Wird die vorliegende Erfindung für die RSA-Schlüsselgenerierung eingesetzt, so verbessert sich diese hinsichtlich ihrer Zeitkomplexität, da die Berechnung von multiplikativen Inversen via erweitertem Euklidschem Algorithmus nur noch auf halber Bitlänge bezüglich des Moduls N ausgeführt werden muß. Die Berechnung des geheimen Schlüssels d mittels des Chinesischen Restsatzes ist um den Faktor 4 schneller, als wenn kein Chinesischer Restsatz eingesetzt wird. Der Chinesische Restsatz kann gemäß der vorliegenden Erfindung eingesetzt werden, da anstatt der Eulerschen $\phi$-Funktion zur Berechnung des Schlüsselpaars e und d die Carmichaelsche $\lambda$-Funktion eingesetzt wird, da dieselbe als ein Produkt zweier teilerfremder Faktoren dargestellt werden kann, welche für den Chinesischen Restsatz dann die beiden Untermodule bilden.

Es sei darauf hingewiesen, daß das erfindungsgemäße Konzept nicht nur zur RSA-Schlüsselerzeugung eingesetzt werden kann, sondern überall da, wo eine multiplikative Inverse zu einer Zahl zu berechnen ist, wobei der Modul aus zwei oder mehr Faktoren besteht, die nicht zueinander teilerfremd sind. Die Carmichaelsche $\lambda$-Funktion wird immer dazu führen, daß die multiplikative Inverse bezüglich eines Moduls unter Verwendung des Chinesischen Restsatzes erhalten werden kann, da nunmehr teilerfremde Faktoren vorliegen, die als Untermodule eingesetzt werden können.

Bezugszeichenliste

Verfahren und Vorrichtung zum Ermitteln eines Schlüsselpaars und zum Erzeugen von RSA-Schlüsseln

100   Auswählen von e
110   Berechnen von $d_p$
120   Berechnen von $d_q$
130   Ermitteln von d
200   Erhalten des öffentlichen Schlüssels
210   Darstellen der Nachricht als Zahl
220   Berechnen von C
230   Ausgeben von C
240   Kanal

250 Empfangen von C
260 Berechnen von M
300 Erzeugen von p, q
310 Berechnen von N
320 Auswählen von e
330 Berechnen von d
340 Ausgeben des öffentlichen Schlüssels
350 Speichern des privaten Schlüssels

**Patentansprüche**

1. Verfahren zum Ermitteln eines Schlüsselpaars mit einer ersten Zahl und einer zweiten Zahl, wobei die zweite Zahl die multiplikative Inverse bezüglich eines Moduls der ersten Zahl ist, wobei der Modul gleich dem Produkt aus einer ersten Primzahl und einer zweiten Primzahl ist, mit folgenden Schritten:

   Auswählen (100) der ersten Zahl;
   **gekennzeichnet durch**:
   Berechnen (110) einer ersten Unterzahl für die zweite Zahl als multiplikative Inverse der ersten Zahl bezüglich eines ersten Untermoduls, der gleich der ersten Primzahl weniger 1 geteilt **durch** den größten gemeinsamen Teiler aus der ersten Primzahl weniger 1 und der zweiten Primzahl weniger 1 ist;
   Berechnen (120) einer zweiten Unterzahl für die zweite Zahl als multiplikative Inverse der ersten Zahl bezüglich eines zweiten Untermoduls, der gleich der zweiten Primzahl weniger 1 ist, wobei der erste Untermodul und der zweite Untermodul teilerfremd sind; und
   Ermitteln (130) der zweiten Zahl unter Verwendung der ersten Unterzahl und der zweiten Unterzahl mittels des Chinesischen Restsatzes.

2. Verfahren nach Anspruch 1, bei dem ein Schlüssel des Schlüsselpaars als öffentlicher Schlüssel und ein zweiter Schlüssel des Schlüsselpaars als privater Schlüssel eines asymmetrischen Verschlüsselungsverfahrens dienen.

3. Verfahren nach Anspruch 1 oder 2, bei dem in dem Schritt des Berechnens (110) der ersten Unterzahl und in dem Schritt des Berechnens (120) der zweiten Unterzahl der erweiterte Euklidsche Algorithmus verwendet wird.

4. Verfahren nach einem der vorhergehenden Ansprüche, bei dem im Schritt des Ermittelns (130) folgende Gleichungen verwendet werden:

$$x_p = (d_p - d_q) \times [(q-1)^{-1} \bmod (p-1)/ggT(p-1,q-1)]$$
$$\bmod (p-1)/ggT(p-1,q-1)$$

$$d = d_q + x_p \times (q-1)$$

   wobei folgendes gilt:

   $d_p$ ist die erste Unterzahl;
   $d_q$ ist die zweite Unterzahl;
   q ist die erste Primzahl;
   p ist die zweite Primzahl;
   ggT bezeichnet die Operation "größter gemeinsamer Teiler";
   mod bezeichnet die Moduloperation; und
   $x_p$ ist eine Hilfsgröße.

5. Verfahren nach Anspruch 1, bei dem das Schlüsselpaar Schlüssel für ein RSA-Verschlüsselungsverfahren, umfasst, wobei das Verfahren ferner folgende schritte aufweist:

Auswählen der ersten Primzahl; und der zweiten Primzahl
Berechnen des Produkts aus den Primzahlen;
Ausgeben des Produkts aus den Primzahlen und der ersten Zahl als öffentlicher Schlüssel; des RSA-Verschlüsselungsverfahrens und
Speichern der zweiten Zahl als privater Schlüssel des RSA-Verschlüsselungsverfahrens.

6. Vorrichtung zum Ermitteln eines Schlüsselpaars mit einer ersten Zahl und einer zweiten Zahl, wobei die zweite Zahl die multiplikative Inverse bezüglich eines Moduls der ersten Zahl ist, wobei der Modul gleich dem Produkt aus einer ersten Primzahl und einer zweiten Primzahl ist, mit folgenden Merkmalen:

einer Einrichtung (100) zum Auswählen der ersten Zahl;
**gekennzeichnet durch**
eine Einrichtung (110) zum Berechnen einer ersten Unterzahl für die zweite Zahl als multiplikative Inverse der ersten Zahl bezüglich eines ersten Untermoduls, der gleich der ersten Primzahl weniger 1 geteilt **durch** den größten gemeinsamen Teiler aus der ersten Primzahl weniger 1 und der zweiten Primzahl weniger 1 ist;
eine Einrichtung (120) zum Berechnen einer zweiten Unterzahl für die zweite Zahl als multiplikative Inverse der ersten Zahl bezüglich eines zweiten Untermoduls, der gleich der zweiten Primzahl weniger 1 ist, wobei der erste Untermodul und der zweite Untermodul teilerfremd sind; und
eine Einrichtung (130) zum Ermitteln der zweiten Zahl unter Verwendung der ersten Unterzahl und der zweiten Unterzahl mittels des Chinesischen Restsatzes.

7. Vorrichtung nach Anspruch 6, bei der das Schlüsselpaar Schlüssel für ein RSA-Verschlüsselungsverfahren, aufweist, wobei die Vorrichtung ferner folgende Merkmale aufweist:

eine Einrichtung zum Auswählen der ersten Primzahl und der zweiten Primzahl;
eine Einrichtung zum Berechnen des Produkts aus den Primzahlen;
eine Einrichtung zum Ausgeben des Produkts und der ersten Zahl als öffentlicher Shlüssel des RSA-Verschlüsselungsverfahrens; und
eine Einrichtung zum Speichern der zweiten Zahl als privater Schlüssel des RSA-Verschlüsselungsverfahrens.

**Claims**

1. A method of determining a pair of keys comprising a first number and a second number, the second number being the multiplicative inverse with respect to a modulus of the first number, said modulus being equal to the product of a first prime number and a second prime number, said method comprising the steps of:

selecting (100) the first number;
**characterized by**
computing (110) a first sub-number for the second number as a multiplicative inverse of the first number with respect to a first sub-modulus that is equal to the first prime number minus 1 divided by the greatest common divisor of the first prime number minus 1 and the second prime number minus 1;
computing (120) a second sub-number for the second number as multiplicative inverse of the first number with respect to a second sub-modulus that is equal to the second prime number minus 1, with said first sub-modulus and said second sub-modulus being relatively prime; and
determining (130) the second number using the first sub-number and the second sub-number by means of the Chinese remainder theorem.

2. A method according to claim 1, wherein one key of said pair of keys serves as a public key and a second key of said pair of keys serves as a private key of an asymmetric encryption system.

3. A method according to claim 1 or 2, wherein said step of computing (110) the first sub-number and said step of computing (120) the second sub-number make use of the extended Euclidean algorithm.

4. A method according to any of the preceding claims, wherein said step of determining (130) makes use of the following equations:

$$x_p = (d_p - d_q) \times [(q-1)^{-1} \bmod (p-1)/gcd(p-1,q-1)]$$
$$\bmod (p-1)/gcd(p-1,q-1)$$

$$d = d_q + x_p \times (q-1)$$

wherein

$d_p$ is the first sub-number;
dq is the second sub-number;
q is the first prime number;
p is the second prime number;
gcd designates the operation "greatest common divisor";
mod designates the modular operation; and
$x_p$ is an auxiliary quantity.

5. A method according to claim 1, wherein said pair of keys comprises keys for an RSA encryption system, the method further comprising the steps of:

selecting the first prime number and the second prime number;
computing the product of the prime numbers;
outputting the product of the prime numbers and the first number as public key of said RSA encryption system; and
storing the second number as private key of said RSA encryption system.

6. An apparatus for determining a pair of keys comprising a first number and a second number, the second number being the multiplicative inverse with respect to a modulus of the first number, said modulus being equal to the product of a first prime number and a second prime number, said apparatus comprising:

a means (100) for selecting the first number;
**characterized by**
a means (110) for computing a first sub-number for the second number as a multiplicative inverse of the first number with respect to a first sub-modulus that is equal to the first prime number minus 1 divided by the greatest common divisor of the first prime number minus 1 and the second prime number minus 1;
a means (120) for computing a second sub-number for the second number as multiplicative inverse of the first number with respect to a second sub-modulus that is equal to the second prime number minus 1, with said first sub-modulus and said second sub-modulus being relatively prime; and
a means (130) for determining the second number using the first sub-number and the second sub-number by means of the Chinese remainder theorem.

7. An apparatus according to claim 6, wherein said pair of keys comprises keys for an RSA encryption system, the apparatus further comprising:

a means for selecting the first prime number and the second prime number;
a means for computing the product of the prime numbers;
a means for outputting said product and the first number as public key of said RSA encryption system; and
a means for storing the second number as private key of said RSA encryption system.

**Revendications**

1. Procédé pour déterminer une paire de clés avec un premier nombre et un deuxième nombre, le deuxième nombre étant l'inverse multiplicatif par rapport à un module du premier nombre, le module étant égal au produit d'un premier nombre premier et d'un deuxième nombre premier, aux étapes suivantes consistant à:

sélectionner (100) le premier nombre;
**caractérisé par**:
calculer (110) un premier sous-nombre pour le deuxième nombre comme inverse multiplicatif du premier nombre par rapport à un premier sous-module qui est égal au premier nombre premier moins 1 divisé par le diviseur commun le plus grand du premier nombre premier moins 1 et du deuxième nombre premier moins 1;
calculer (120) un deuxième sous-nombre pour le deuxième nombre comme inverse multiplicatif du premier nombre par rapport à un deuxième sous-module qui est égal au deuxième nombre premier moins 1, le premier sous-module et le deuxième sous-module étant premiers entre eux; et
déterminer (130) le deuxième nombre à l'aide du premier sous-nombre et du deuxième sous-nombre au moyen des restes chinois.

2.  Procédé selon la revendication 1, dans lequel une clé de la paire de clés sert de clé publique et une deuxième clé de la paire de clés sert de clé privée d'un procédé de cryptage asymétrique.

3.  Procédé selon la revendication 1 ou 2, dans lequel sont utilisés, à l'étape de calcul (110), le premier sous-nombre et, à l'étape de calcul (120), le deuxième sous-nombre de l'algorithme d'Euclide étendu.

4.  Procédé selon l'une des revendications précédentes, dans lequel sont utilisées, à l'étape de détermination (130), les équations suivantes:

$$x_p = (dp - d_q) \times [(q-1)^{-1} \bmod (p-1)/ggT(p-1, q-1)]$$
$$\bmod (p-1)/ggT(p-1,q-1))$$

$$d = d_q + x_p \times (q-1)$$

où est d'application ce qui suit:

$d_p$ est le premier sous-nombre;
$d_q$ est le deuxième sous-nombre;
q est le premier nombre premier;
p est le deuxième nombre premier;
ggT désigne l'opération "diviseur commun le plus grand";
mod désigne l'opération de module; et
$x_p$ est une grandeur auxiliaire.

5.  Procédé selon la revendication 1, dans lequel la paire de clés comprend des clés pour un procédé de cryptage RSA, le procédé présentant par ailleurs les étapes suivantes:

sélectionner le premier nombre premier et le deuxième nombre premier;
calculer le produit des nombres premiers;
sortir le produit des nombres premiers et du premier nombre comme clé publique du procédé de cryptage RSA; et
mémoriser le deuxième nombre comme clé privée du procédé de cryptage RSA.

6.  Dispositif pour déterminer une paire de clés avec un premier nombre et un deuxième nombre, le deuxième nombre étant l'inverse multiplicatif par rapport à un module du premier nombre, le module étant égal au produit d'un premier nombre premier et d'un deuxième nombre premier, aux caractéristiques suivantes:

un dispositif (100) destiné à sélectionner le premier nombre;
**caractérisé par**:
un dispositif (110) destiné à calculer un premier sous-nombre pour le deuxième nombre comme inverse multiplicatif du premier nombre par rapport à un premier sous-module qui est égal au premier nombre premier moins 1 divisé par le diviseur commun le plus grand du premier nombre premier moins 1 et du deuxième nombre premier moins 1;

un dispositif (120) destiné à calculer un deuxième sous-nombre pour le deuxième nombre comme inverse multiplicatif du premier nombre par rapport à un deuxième sous-module qui est égal au deuxième nombre premier moins 1, le premier sous-module et le deuxième sous-module étant premiers entre eux; et

un dispositif (130) destiné à déterminer le deuxième nombre à l'aide du premier sous-nombre et du deuxième sous-nombre au moyen des restes chinois.

7. Dispositif selon la revendication 6, dans lequel la paire de clés présente des clés pour un procédé de cryptage RSA, le dispositif présentant par ailleurs les caractéristiques suivantes:

un dispositif destiné à sélectionner le premier nombre premier et le deuxième nombre premier;

un dispositif destiné à calculer le produit des nombres premiers;

un dispositif destiné à sortir le produit et le premier nombre comme clé publique du procédé de cryptage RSA; et

un dispositif destiné à mémoriser le deuxième nombre comme clé privée du procédé de cryptage RSA.

100 — Auswählen von e ← —————— p, q, N = p·q

110 —

Berechnen von $d_p$

$e \cdot d_p = 1 \bmod \dfrac{p-1}{\text{ggT}\,(p-1,\,q-1)}$

120 —

Berechnen von $d_q$
$e \cdot d_q = 1 \bmod (q-1)$

130 —

Ermitteln von d aus $d_p$
und $d_q$ mittels CRT

FIG 1

200 — Erhalten des öffentl. Schlüssels (N, e)     RSA-Algorithmus

210 — Darstellen der Nachricht als Zahl M

220 — Berechnen von $C = M^e \bmod N$     Verschlüsseln

230 — Ausgeben von C

— 240

250 — Empfangen von C

260 — Berechnen von $M = C^d \bmod N$     Entschlüsseln

# FIG 2 (Stand der Technik)

300 — Erzeugen von p, q

RSA-Schlüsselerzeugung

310 — Berechnen von N = p·q
$\phi$ = (p-1) (q-1)

320 — Auswählen von e [gcd ($\varphi$, e) = 1]

330 — Berechnen von d, damit gilt:
e·d = 1 (mod $\phi$)

350

340 — Ausgeben des öffentlichen Schlüssels (N, e)

Speichern des privaten Schlüssels d

FIG 3 (Stand der Technik)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5046094 A

**In der Beschreibung aufgeführte Nicht-Patentliteratur**

- **MENEZES ; VAN OORSCHOT ; VANSTONE.** Handbook of Applied Cryptography. CRC Press, 1997, 285-291

- **MENEZES ; VANSTONE ; VAN OORSCHOT.** Handbook of Applied Cryptography. CRC Press, 1997, 66-68612-613